# EUROPEAN PATENT SPECIFICATION

(11) **EP 2 762 459 B1**
(45) Date of publication and mention of the grant of the patent: **26.12.2018**
(21) Application number: 12835238.2
(22) Date of filing: 27.09.2012
(51) Int. Cl.: C03C 3/087, C03C 21/00

(54) **COVER GLASS FOR DISPLAY DEVICE, AND MANUFACTURING METHOD FOR SAME**
DECKGLAS FÜR EINE ANZEIGEVORRICHTUNG UND HERSTELLUNGSVERFAHREN DAFÜR
LAMELLE COUVRE-OBJET POUR DISPOSITIF D'AFFICHAGE, ET SON PROCÉDÉ DE FABRICATION

(30) Priority: 29.09.2011 JP 2011215606; 21.06.2012 JP 2012139804
(43) Date of publication of application: 06.08.2014
(73) Proprietor: Central Glass Company, Limited, Yamaguchi 755-0001 (JP)
(72) Inventor: MATSUDA Yu, Matsusaka-shi Mie 515-0001 (JP); TSUZUKI Tatsuya, Matsusaka-shi Mie 515-0001 (JP); MITAMURA Naoki, Matsusaka-shi Mie 515-0001 (JP); MURAMOTO Tadashi, Matsusaka-shi Mie 515-0001 (JP)
(74) Representative: Vossius & Partner Patentanwälte Rechtsanwälte mbB
(86) International application number: PCT/JP2012/074926
(87) International publication number: WO 2013/047676

(56) References cited:
- WO-A1-2010/014163
- JP-A- S62 270 439
- JP-A- 2004 352 535
- JP-A- 2008 195 602
- JP-A- 2008 247 732
- US-A- 3 798 013
- US-A- 4 846 868
- US-A1- 2010 119 846

## Description

### TECHNICAL FIELD

The present invention relates to a cover glass for display devices, specifically a chemically strengthened glass suitable for cover glasses or integrated cover glasses having functions of both a substrate and a cover glass for display devices (including display devices having functions of an input arrangement) of electric devices (e.g. mobile phones, smartphones, tablet computers).

### BACKGROUND ART

Resin covers are widely used as display protectors for mobile electronic devices such as mobile phones and smartphones. Such resin covers, however, are exceeded by those made of glass in terms of excellence in transmittance, weather resistance, and damage resistance, and additionally, glass improves the aesthetics of displays. Accordingly, there has been an increasing demand for display protectors made of glass in recent years . A cover glass is a component that has an exposed surface, and therefore is susceptible to cracking when exposed to an impact (e.g. contact with a hard object, dropping impact) . For this reason, a demand for glasses with high mechanical strength has been raised.

Two methods of strengthening glass plates are known. One is thermal strengthening (physical strengthening) which involves heating a surface of a glass plate nearly to the softening point of the glass plate and rapidly cooling the surface with a cool blast or the like. Unfortunately, thermal strengthening, when performed on a thin glass plate, is less likely to establish a large temperature differential between the surface and the inside of the glass plate, and therefore less likely to provide a compressive stress layer at the surface portion of the glass plate. Thus, this method fails to provide desired high strength. Another fatal problem is that processing (e.g. cutting) of a thermally strengthened glass plate is difficult because the glass plate will shatter when a preliminary crack for cutting is formed on the surface.

The other method is chemical strengthening. The chemical strengthening may be used for strengthening a thin glass plate to be used as a cover glass or a glass with a complicated shape. Chemical strengthening involves ion exchange of a glass to form a compressive stress layer at the surface layer of the glass. For example, low-temperature type chemical strengthening is widely known in which a glass made of soda-lime glass or the like is submerged in a molten salt (e.g. potassium nitrate) at a temperature lower than the annealing point of the glass to perform ion exchange of alkali metal ions (e.g. sodium ions) having a smaller ionic radius present in a surface layer of a glass with alkali metal ions (e.g. potassium ions) having a larger ionic radius.

Surface compressive stress and depth of a compressive stress layer can be used as measures of the strength of chemically strengthened glasses. The term "surface compressive stress" or simply "compressive stress" refers to a compressive stress in the outermost layer of a glass, which is generated by incorporation of ions having a larger volume into the surface layer of the glass by ion exchange. A compressive stress cancels tensile stress that is a factor of breaking glasses, and thus contributes to higher strength of chemically strengthened glasses than that of other glasses. Accordingly, the surface compressive stress can be used as a direct measure for the improvement of the strength of glasses.

The "depth of a compressive stress layer" or simply "depth of layer" refers to the depth of a region where a compressive stress is present, as measured from the outermost surface of the glass plate as a standard. A deeper compressive stress layer corresponds to higher ability to prevent a large microcrack (crack) on the surface of the glass from growing, in other words, higher ability to maintain the strength against damage.

In order to efficiently perform ion exchange of a surface layer of a glass, that is, in order to form a deeper compressive stress layer, the glass needs to be in contact with a molten salt at higher temperatures or for a longer period of time. However, this also causes an increase in a relaxation rate of a compressive stress derived from the viscosity of the glass. For this reason, the compressive stress generated by ion exchange tends to be high when the glass is allowed to be in contact with a molten salt at lower temperatures or for a shorter period of time. In general, a surface compressive stress and a depth of a compressive stress layer cannot keep both the sufficient levels, and it is difficult to find production conditions suitable for chemical strengthening.

The following chemically strengthened glasses and methods of manufacturing the chemical strengthening glasses have been reported so far. For example, Patent Literature 1 has disclosed a chemically strengthened glass improved in glass strength by, as a primary treatment, contacting main alkali metal ions A, which are the largest in amount among all the alkali metal ion components of the glass, with a salt that contains only the alkali metal ions A to increase the amount of the alkali metal ions A in a surface layer; and, as a secondary treatment, replacing the alkali metal ions A with alkali metal ions B having a larger ionic radius than the alkali metal ions A.
Patent Literature 2 has disclosed a method of chemical strengthening. The method includes, as a primary treatment, contacting a soda-lime-based glass plate with a salt at a temperature equal to or lower than the strain point of the glass plate for an appropriate period of time. Here, the salt contains alkali metal ions A and alkali metal ions B having a larger ionic radius than the alkali metal ions A such that the proportion of the alkali metal ions A should meet a proportion P (which is a proportion of the alkali metal ions A to the total amount of the alkali metal ions A and B). The methods subsequently includes, as a secondary treatment, contacting the glass plate with a salt having a proportion Q, which is smaller than the proportion P, under at least one condition selected from conditions where a temperature is lower than the temperature in the primary treatment and a time period is shorter than that in the primary treatment. Further, Patent Literature 3 has disclosed a method of strengthening aluminosilicate glass which includes primary and secondary treatments.

Soda-lime glass is widely used as a material of glasses used in a chemically strengthened form, such as a cover glass. Soda-lime glass is extremely commonly used for a glass plate. Further, soda-lime glass is a low-cost glass suitable for mass production, and is therefore used widely in various applications. An aluminosilicate composition, which has a higher ion exchange capacity than soda-lime glass, tends to be used for cover glasses used as a protective member for recent displays. For example, Patent Literatures 4 and 5 have disclosed an aluminosilicate composition designed to be chemically strengthened.

As described above, glasses are in high demand in protective members for display devices of mobile electronic devices (e.g. mobile phones, smartphones, tablet computers). Display devices with a touch panel function explosively increase their market share. Such display devices generally include a liquid crystal panel as an information display device, a touch panel as an input arrangement, and a cover glass for protecting these. Such a cover glass is conventionally manufactured by cutting and processing a large glass plate into glasses in a certain shape, and subsequently chemical strengthening the respective glasses. Such a conventional method needs two or more of glass members for a touch panel substrate and a cover glass.

Regarding a recent manufacturing manner of touch panels, an integrated cover glass has been developed which is a single cover glass equipped with touch sensors thereon having functions of both a cover glass and a touch panel. Manufacturing of such an integrated cover glass includes forming touch sensors on a chemically strengthened large glass plate, and subsequently cutting the glass plate into cover glasses in a certain shape. This manufacturing method of integrated cover glasses greatly differ from the conventional manufacturing method in that the integrated cover glasses are prepared by cutting a chemically strengthened glass. In this case, cutting processability of a chemically strengthened glass is required.

Chemically strengthened glasses can be cut, but with great difficulty. Cut difficulty of chemically strengthened glasses is a main reason for reducing the production yield, and also causes breakage or other problems of products made from chemically strengthened glasses. In order to solve the above problems, Patent Literatures 6 and 7 have disclosed a soda-lime-based chemically strengthened glass which is appropriately cut.

Regarding mechanical strength (e.g. resistance to contact with a hard object, dropping impact) of glass, glass is a brittle material. A brittle material breaks due to growth of a microcrack (crack) on the surface of the material. The density and the size of microcracks are stochastically-distributed on the surface of the material. Therefore, the strength of a brittle material is stochastically-distributed widely. That is, the strength of a glass material is not represented as a property inherent in the material, and essentially varies . For this reason, in order to obtain a cover glass reliable as a product, the cover glass needs to be improved in strength based on the control of the statistical distribution. A measure of such strength is, for example, a strength value when a cumulative fracture probability is 1% (hereinafter, strength when a cumulative fracture probability is 1%).

In order to improve the mechanical strength with strength reliability, resistance to impacts and damages that cause breakage of glasses would generally be enhanced by increasing a surface compressive stress and by making a deeper compressive stress layer. However, this means that it does not allow even a preliminary crack for glass cutting to be formed thereon, which causes difficulty in cutting. In addition, a high surface compressive stress and a deeper compressive stress layer generate a high central tensile stress in the inside of a glass. Even if a crack for cutting can be formed on the glass, the central tensile stress automatically propagates the crack made for cutting to cause a danger of shuttering the glass. Thus, high strength reliability tends to impair the cutting easiness of a chemically strengthened glass.

As described above, in a chemically strengthened glass, good cutting easiness is contrary to good strength reliability. They are therefore difficult to keep both in a balanced manner. Accordingly, a cover glass made of a chemically strengthened glass having not only excellent mechanical strength with strength reliability (strength when a cumulative fracture probability is 1%), but also excellent cutting processability, is needed.

### CITATION LIST

### - Patent Literature

Patent Literature 1: JP H8-18850 B
Patent Literature 2: JP S54-17765 B
Patent Literature 3: JP 2011-529438 T
Patent Literature 4: JP 2010-275126 A
Patent Literature 5: JP 2011-213576 A
Patent Literature 6: JP 2004-359504 A
Patent Literature 7: JP 2004-83378 A

### SUMMARY OF INVENTION

### - Technical Problem

As described above, it is usual to require higher mechanical strength against impacts (e.g. contact with a hard object, dropping impact) needed for cover glasses as well as cutting easiness of a chemically strengthened glass for good productivity of cover glasses. The important factor in the mechanical strength is finally the strength of a glass surface, that is, the surface strength, because a side surface (edge) part of a cover glass attached to a display device of an electronic device is usually protected. Here, it is known that the strength of an edge (side surface) depends only on the shape of the edge after processing, and does not contribute to the measure of the strength as a glass material. However, it is difficult to provide a cover glass suitable for mass production at low costs, having high strength when a cumulative fracture probability is 1%, and made of a chemically strengthened glass with good cutting processability, by only conventional inventions.

Soda-lime glass is not suitable for chemical strengthening that involves ion exchange of a surface layer of a glass although it has been used as a material for windowpanes, glass bins, and the like, and is a low-cost glass suitable for mass production. Patent Literatures 4 and 5 have disclosed glass (aluminosilicate glass) suitable for chemical strengthening in view of chemical composition. Aluminosilicate glass is designed to have a higher ion exchange capacity than soda-lime glass by, for example, increasing the amount of Al₂O₃ to substantially 10% (mass%) or more, which improves the ion exchange capacity, and adjusting the ratio between alkali metal oxide components Na₂O and K₂O or the ratio between alkaline-earth metal oxide components MgO and CaO, and thus is optimized for chemical strengthening. Aluminosilicate glass, which has higher ion exchange capacity than soda-lime glass as described above, is able to form a deep compressive stress layer having a depth of 20 µm or more, or a deeper depth of 30 µm or more. A deep compressive stress layer has high damage resistance, but unfortunately, this means that it does not allow even a preliminary crack for glass cutting to be formed thereon. Even if a crack can be formed on the glass, it is impossible to cut the glass along the crack, and if a deeper crack is formed, the glass may shatter. Thus, it is very difficult to cut a chemically strengthened aluminosilicate glass.

As described above, a chemically strengthened aluminosilicate glass has too high a surface compressive stress and too deep a compressive stress layer. This means that the aluminosilicate glass has good reliability for required strength, but has high difficulty in cutting. Therefore, it is hard to say that such an aluminosilicate glass is suitable for an integrated cover glass. Even if the problem of cutting were overcome, aluminosilicate glass requires a higher melting temperature than soda-lime glass because aluminosilicate glass contains larger amounts of Al₂O₃ and MgO, which elevate the melting temperature, than those contained in soda-lime glass. In a mass production line, it is produced via a highly viscous molten glass, which leads to poor production efficiency and high costs.

Accordingly, there is a demand for a technique enabling use of soda-lime glass, which is widely used for glass plates, is more suitable for mass production than aluminosilicate glass, and therefor is available at low cost, and is already used in various applications, as a glass material. However, it would be difficult to provide a cover glass having both sufficient strength and good cutting easiness by treating soda-lime glass in a conventional manner because higher strength contrary enhances cutting difficulty.

The cutting easiness and the strength of a chemically strengthened soda-lime glass are described below.

As for cutting easiness, Patent Literatures 6 and 7 have disclosed chemically strengthened glasses suitable for cutting. However, Patent Literature 6 has focused only on the surface hardness among various properties of a chemically strengthened glass, but is silent on a surface compressive stress and a depth of a compressive stress layer, which are important properties of a chemically strengthened glass. Patent Literature 7 has reported a surface compressive stress and a depth of a compressive stress layer, but these are similar levels to those of general chemically strengthened glass articles. Therefore, the surface compressive stress of soda-lime glass will not be likely to be improved based on the teachings in Patent Literature 7. Thus, soda-lime glass has relatively good cutting easiness compared to aluminosilicate glass, but is difficult to increase the strength.

Patent Literatures 1 to 3 have disclosed conventional techniques for improving strength. Improvement in the strength of a chemically strengthened glass in Patent Literature 1 is characterized mainly by the primary treatment, that is, a step of contacting a glass plate with a salt that contains only Na ions, which are a main ionic component of the glass plate. In this method, since the amount of Na ions, which are to be exchanged, in a surface layer of a glass is increased through the primary treatment, a compressive stress generated by exchanging Na ions with K ions will be increased in the secondary treatment. The present inventors have studied on improvement of the strength and the cutting easiness of a chemically strengthened glass based on the teachings of Patent Literature 1, and found some points to be solved. Specifically, there is room for improvement in reducing stress relaxation occurred by performing exchange of Na ions with K ions in the secondary treatment. Further, the statistical distribution of the strength of a chemically strengthened glass has not been examined yet, and the strength reliability of a glass as a product has not been clearly disclosed. Further, cutting easiness of a chemically strengthened glass has not been examined yet. In addition, the primary treatment allows to increase the amount of Na ions in a surface layer of a glass, which are to be exchanged. However, the surface of the glass brought in contact with too much Na ions in the primary treatment is likely to become cloudy to create a large problem on improving strength reliability.

Patent Literature 2 has disclosed a method of chemical strengthening which allows improvement of glass strength. However, the conditions of the chemical strengthening satisfying the requirement in the Patent Literature 2 include huge combinations of various conditions. In addition, the statistical distribution of the strength has not been examined yet, and the strength reliability of a glass as a product has not been clearly disclosed. The soda-lime-based chemically strengthened glass prepared according to Example 1 in Patent Literature 2 is difficult to cut. According to Example 1, it required a lot of time for carrying out the primary and secondary treatments. Therefore, the method is not suitable for realistic mass production.

Patent Literature 3 has disclosed a method of chemical strengthening to avoid an influence of ions eluted from the surface of a glass as impurities in a molten salt bath. The method can solve the problem of gradual dilution of the salt bath by the eluted ions. Such chemical strengthening is a method continuously producing chemically strengthened glasses having the same level of strength as that of a chemically strengthened glass prepared in an uncontaminated salt bath. However, the method is not a method for producing a glass having more improved strength than that of a glass prepared in an uncontaminated salt bath.

It has been understood that a glass plate which can be cut and has a relatively high surface compressive stress of about 600 MPa can be made of soda-lime glass even by one-step chemical strengthening, which does not include the primary and secondary treatments, disclosed in Patent Literatures 1 to 3, under the conditions where alkali ions (that is, K ions) having a larger ionic radius in a salt bath are ultra-highly purified and the depth of surface compressive stress layer is set at 10 to 13 µm so as to be cut by a scribing treatment. However, it was recently found that the strength when a cumulative fracture probability was 1% determined in accordance with JIS R1625 (1996) from analysis of the statistical distribution of the surface strength of the glass plate was less likely to increase. That is, it was found that the glass had a high surface compressive stress, but had poor strength reliability.

Thus, several problems lain in the conventional manners have been described above. It is hard to say that technical studies have been made so far on development for a cover glass with sufficient strength relating to the strength reliability when a cumulative fracture probability is 1% and cutting easiness, made of soda-lime glass, which has a lower ion exchange capacity than that of aluminosilicate glass and is not particularly suitable for chemical strengthening in view of composition.

In order to solve the above conventional problems, the present inventors have extensively examined on a chemically strengthened glass having excellent cutting processability and a high surface compressive stress. Consequently, the inventors have achieved the invention of a glass plate which can be cut and has a high surface compressive stress, high strength when a cumulative fracture probability is 1%, and excellent strength reliability, produced from a chemically strengthened soda-lime glass.

That is, the present invention provides a cover glass for display devices and a method of manufacturing the cover glass. The cover glass is made of soda-lime glass, is suitable for cover glasses for display devices, and can be easily cut. Further, the cover glass has high surface strength when a cumulative fracture probability is 1%, that is, has excellent strength reliability.

### - Solution to Problem

A cover glass for display devices of the present invention includes
a chemically strengthened glass manufactured by ion exchange of a surface layer of a glass plate to replace Na ions with K ions,
the cover glass having a main surface part in which a compressive stress layer is formed and a side surface part that has a region where the compressive stress layer is formed and a region where no compressive stress layer is formed,
the compressive stress layer having a depth of 6 to 15 µm,
wherein a shape parameter determined in accordance with JIS R 1625 (1996) based on analysis of a fracture stress of the cover glass measured by a coaxial double ring test is not less than 7, and strength of the cover glass when a cumulative fracture probability is 1% is not less than 450 MPa; and
the glass plate before the ion exchange is made of soda-lime glass substantially composed of SiO₂: 65 to 75%, Na₂O + K₂O: 5 to 20%, CaO: 2 to 15%, MgO: 0 to 10%, and Al₂O₃: 0 to 5% on a mass basis.

The cover glass for display devices of the present invention includes a chemically strengthened glass in which Na ions in the surface layer of the glass are ion exchanged with K ions present outside the glass. Since the K ions are incorporated in the structure of the surface layer, the surface layer tends to have a volume expansion. Under the temperature conditions in this method, the glass cannot reduce the volume expansion. Consequently, the expansion substantially remains as a residual compressive stress in the glass. The cover glass for display devices of the present invention is prepared by cutting a glass plate for a cover glass for display devices of the present invention. The cover glass thus obtained has side surface parts (edge parts) that have a region where a compressive stress layer is formed and a region where no compressive stress layer is formed.

In the cover glass for display devices of the present invention, the depth of the compressive stress layer, with a compressive stress obtained through ion exchange, in the main surface part and the side surface part is 6 to 15 µm. A glass having a compressive stress layer with a depth of less than 6 µm cannot withstand commercial use because microcracks may be formed in use and such microcracks reduce the strength of the glass. On the other hand, a glass having a compressive stress layer with a depth of more than 15 µm may be difficult to cut by scribing.

The most important feature of the cover glass for display devices of the present invention is that it has a compressive stress layer with a limited depth, and has improved reliability of the mechanical strength as a cover glass. As a measure of the reliability of the mechanical strength of the cover glass, a shape parameter obtained in accordance with JIS R1625 (1996) by statistically processing, the surface strength measured by a coaxial double ring test, and a strength when a cumulative fracture probability is 1% are evaluated. A shape parameter (Weibull modulus) is a measure of variation of strength distribution of a brittle material. The strength needed for the cover glass for display devices is, for example, set at not less than 400 MPa in a product specification. Thus, design strength including certain safety is recognized. In the cover glass for display devices of the present invention, "the strength when a cumulative fracture probability is 1% is 450 MPa" means that even if an external action is applied to a cover glass so that 450 MPa of an internal force is generated, the fracture probability is no more than 1%. A cover glass having a shape parameter of less than 7 or strength when a cumulative fracture probability is 1% of less than 450 MPa is poor in strength reliability, and therefore cannot withstand commercial use.

The cover glass for display devices of the present invention includes a glass made of soda-lime glass having a specific composition as a glass before ion exchange. Use of soda-lime glass is advantageous compared to use of aluminosilcate glass suitable for chemical strengthening because an increase in production costs due to material change and reduced production efficiency is avoided. For example, to increase the amount of aluminum oxide in a composition (e.g. the design of the composition of aluminosilicate glass) is effective for increasing the ion exchange capacity, but is accompanied by not only increased material costs but also remarkable elevation of the melting temperature of the glass, which contributes to remarkably high production costs of the glass. Another effective way to increase the ion exchange capacity is to use MgO as the alkaline-earth component in place of a portion of CaO. This, however, also elevates the melting temperature of the glass, and thereby leads to increased production costs.

In the cover glass for display devices of the present invention, the main surface part preferably has a surface compressive stress of not less than 450 MPa.

A glass having a surface compressive stress of less than 450 MPa has reduced average strength, and is susceptible to breaking when exposed to an impact (e.g. contact with a hard object, dropping impact).

In the cover glass for display devices of the present invention, the ion exchange preferably includes a first step of contacting the glass plate with a first salt that includes Na ions and K ions at a proportion P of the Na ions as expressed as a molar percentage of the total amount of the Na ions and the K ions; and a subsequent second step of contacting the glass plate with a second salt that includes Na ions and K ions at a proportion Q of the Na ions as expressed as a molar percentage of the total amount of the Na ions and the K ions, where the proportion Q is smaller than the proportion P.

A glass plate for a cover glass for display devices of the present invention includes
a chemically strengthened glass plate manufactured by ion exchange of a surface layer of a glass plate to replace Na ions with K ions, the glass plate having a compressive stress layer with a depth of is 6 to 15 µm,
wherein a shape parameter determined in accordance with JIS R 1625 (1996) based on analysis of a fracture stress of the glass plate measured by a coaxial double ring test is not less than 7, and strength of the glass plate when a cumulative fracture probability is 1% is not less than 450 MPa, and
the glass plate before the ion exchange is made of soda-lime glass substantially composed of SiO₂: 65 to 75%, Na₂O + K₂O: 5 to 20%, CaO: 2 to 15%, MgO: 0 to 10%, and Al₂O₃: 0 to 5% on a mass basis.

A method of manufacturing the cover glass for display devices of the present invention includes the steps of:
performing ion exchange of a surface layer of a glass plate to replace Na ions with K ions; and
cutting the glass plate,
the ion exchange including a first step of contacting the glass plate with a first salt that includes Na ions and K ions at a proportion P of the Na ions as expressed as a molar percentage of the total amount of the Na ions and the K ions; and
a subsequent second step of contacting the glass plate with a second salt that includes Na ions and K ions at a proportion Q of the Na ions as expressed as a molar percentage of the total amount of the Na ions and the K ions, where the proportion Q is smaller than the proportion P.

A brittle material such as glass is susceptible to breaking at a locally weakened portion of the surface when an external force is applied to the surface. In the present invention, use of the above first salt, that is, use of a salt containing Na ions and K ions in only certain amounts allows to proceed ion exchange to some extent in the first step, whereby the surface layer of the glass is modified so as to contain both the Na ions and the K ions. It is considered that the virtual temperature of the glass may decrease to make the structure of the glass tight (dense) in this first step. It is considered that, in the subsequent second step in which a salt having a proportion Q, which is smaller than the proportion P, is used, ion exchange between the Na ions and the K ions occurs in the outermost surface of the glass, and, in addition, the K ions are three-dimensionally redispersed in the surface layer of the glass modified through the first step. In this second step, a high surface compressive stress may generate, and microcracks on the surface of the glass may be prevented from growing.

The following experimental data supports that the tight glass structure is obtained by the decrease of the virtual temperature in the first step. The average densities of a glass plate not chemically strengthened, a glass plate prepared through one-step chemical strengthening, and a glass plate prepared through two-step chemical strengthening are measured to be 2.489 g/cm³, 2.493 g/cm³, and 2.497 g/cm³, respectively. The densities of the glass plates prepared through chemical strengthening are measured after a strengthened layer is removed. The results show that the glass plate prepared through two-step chemical strengthening has a higher density.

In the ion exchange in the chemical strengthening, a surface compressive stress and a depth of a compressive stress layer of a chemically strengthened glass are affected by the temperature and the period of time on the chemical strengthening, and the type of a selected treatment liquid and the active property of the treatment liquid. Further, a surface compressive stress and a depth of a compressive stress layer of a chemically strengthened glass may depend on the state of ion exchange in the glass. In particular, in the case of conventional one-step chemical strengthening, a surface compressive stress and a depth of a compressive stress layer are in a trade-off relationship, and are difficult to keep both to sufficient levels. On the contrary, two-step chemical strengthening (ion exchange) and appropriate selection of temperature, period of time on treatment, and composition of the treatment liquid make it possible to effectively enhance the effect of each step, thereby producing a chemically strengthened glass which can be cut and has a high surface compressive stress.

According to the ion exchange described above, the composition of the surface layer of the glass is modified by ion exchange of the Na ions with the K ions in the first step, while the Na ions, which contribute to generation of a compressive stress, are left in the layer. The amount of the K ions is larger in the surface layer modified in the first step than in the layer before the first step. Therefore, the surface layer modified in the first step has a higher strain point. As a result, the relaxation of the stress generated in the second step can be prevented. Thus, a chemically strengthened glass with a high surface compressive stress, made of soda-lime glass, can be produced.

In the method of manufacturing the cover glass for display devices of the present invention, the compressive stress layer formed at a surface of the glass plate through the first step preferably has a depth of 5 to 23 µm.

If the depth of the compressive stress layer formed through the first step is too small, the composition of the surface layer of the glass is not sufficiently modified in the primary treatment, whereby the stress relaxation occurred in the secondary treatment may not be sufficiently prevented. On the contrary, if the depth of the compressive stress layer formed through the first step is too large, the depth of the compressive stress layer finally formed through the secondary treatment becomes large, which adversely affects the cutting easiness of the glass.

As described above, the stress relaxation in the secondary treatment can be prevented by performing the primary treatment, in the present invention. However, glass is inherently impossible to completely prevent progress of stress relaxation. Therefore, a slight stress relaxation may occur in the secondary treatment, and thus the depth of the compressive stress layer finally remaining after the secondary treatment may be changed from the depth of the compressive stress layer formed through the primary treatment. On the contrary, it may be assumed that the amount of ions exchanged in the secondary treatment is larger than that of ions exchanged in the primary treatment, and the depth of the compressive stress layer formed through the second step is slightly deeper than the depth of the compressive stress layer obtained through the primary treatment. However, the depth of the compressive stress layer finally formed through the second step is only slightly changed from the depth of the compressive stress layer formed through the first step (the primary treatment). Since the cutting easiness of the obtained chemically strengthened glass is significantly affected by the depth of the compressive stress layer formed through the first step, it is important to control the depth of the compressive stress layer formed through the first step.

Thus, the glass obtained through the first step preferably has a compressive stress layer with a depth of 5 to 23 µm at the surface thereof.

In relation to the depth of the compressive stress layer formed through the first step, the temperature of the first salt and the period of time for contact of the glass plate with the first salt are controlled depending on the proportion P in the first salt.

If the proportion P in the first salt is too high, the surface of the glass plate is likely to become cloudy, and improvement in the reliability of the glass strength is avoided. On the contrary, if the proportion P is too low, the composition of the surface layer of the glass plate tends to be too sufficiently modified, whereby most of the Na ions in the glass are ion exchanged with the K ions in the first step. For this reason, the ion exchange in the second step is less likely to occur, whereby a desired surface compressive stress and desired strength when a fracture probability is 1% cannot be obtained. Additionally, if the proportion P is too low, a deeper compressive stress layer may be formed through the first step. This also adversely affects the cutting easiness of the glass. Accordingly, in the method of manufacturing the cover glass for display devices of the present invention, the proportion P is preferably 20 to 40 mol%.

If the proportion Q in the second salt is more than 2 mol%, sufficient amount of K ions are not introduced into the surface layer of the glass in the second step, and the K ions are not sufficiently redispersed in the surface layer. As a result, a desired surface compressive stress and desired strength when a fracture probability is 1% cannot be obtained. Accordingly, in the method of manufacturing the cover glass for display devices of the present invention, the proportion Q is preferably 0 to 2 mol%.

In the method of manufacturing the cover glass for display devices of the present invention, the temperature of the first salt is preferably 0.8 to 1.05 times the strain point of the glass plate before the ion exchange.

The strain point is a temperature at which or below which glass does not undergo viscous flow. However, in the chemical strengthening, slight viscous flow occurred at a temperature equal to or lower than the strain point needs to take into consideration because rearrangement of the structure at the atomic level substantially affects the results of the chemical strengthening. The effect of decreasing the virtual temperature, that is, the effect of making the glass structure dense tends to be enhanced as the temperature in the first step (temperature of the first salt) approaches to the strain point. However, at too high a first salt temperature, the surface of the glass is likely to become cloudy, which may affect the improvement in the reliability of the glass strength. In addition, a deeper compressive stress layer may be formed, which may adversely affect the cutting easiness of the glass . Further, the compressive stress generated in the first step tends to relax. On the contrary, at too low a first salt temperature, ion exchange in the first step is not accelerated, and a compressive stress layer having a desired depth is not formed. Further, the structure of the glass is less likely to be thermally rearranged, and the effect of modifying the structure of the surface of the glass is less likely to be obtained.

In the method of manufacturing the cover glass for display devices of the present invention, the temperature of the second salt is preferably lower than the temperature of the first salt.

Too high a temperature in the second step (temperature of the second salt) tends to relax the compressive stress generated in the first step, in the second step. Further, it tends to form a deeper compressive stress layer, which may adversely affect the cutting easiness of the resulting glass. On the contrary, at too low a second salt temperature, the ion exchange in the second step may not be accelerated. Consequently, a high surface compressive stress may not be generated in the second step, and the K ions are less likely to be redispersed. Therefore, a compressive stress layer having a desired depth and desired strength when a fracture probability is 1% may not be obtained.

### - Advantageous Effects of Invention

The cover glass for display devices of the present invention has excellent cutting processability, and excellent reliability of mechanical strength, that is, high strength when a cumulative fracture probability is 1%.

### BRIEF DESCRIPTION OF DRAWINGS

Fig.1 is a perspective view of a cover glass for display devices of the present invention.
Fig.2 is a cross-sectional view showing side surface parts of a cover glass for display devices of the present invention.
Fig.3 is a graph of a calibration curve of an applied load and a generated stress in Example 1.
Fig.4 is a Weibull plot showing the relationship between a fracture stress and a cumulative fracture probability.

### DESCRIPTION OF EMBODIMENTS

The following description is offered to specifically illustrate an embodiment of the present invention. It should be noted that the present invention is not limited only to this embodiment, and the embodiment can be appropriately altered within the scope of the present invention.

A cover glass for display devices and a glass plate for a cover glass for display devices according to one embodiment of the present invention include a chemically strengthened glass manufactured by ion exchange of a surface layer of a glass to replace Na ions in the surface layer of the glass with K ions present outside the glass.

The term "cover glass for display devices" according to one embodiment of the present invention herein is not limited to only those used alone, and is intended to also include, for example, cover glasses having functions of a cover and a substrate in one cover glass, used as touch sensor substrates (e.g. cover glasses called "One Glass Solution" or "integrated cover glasses").

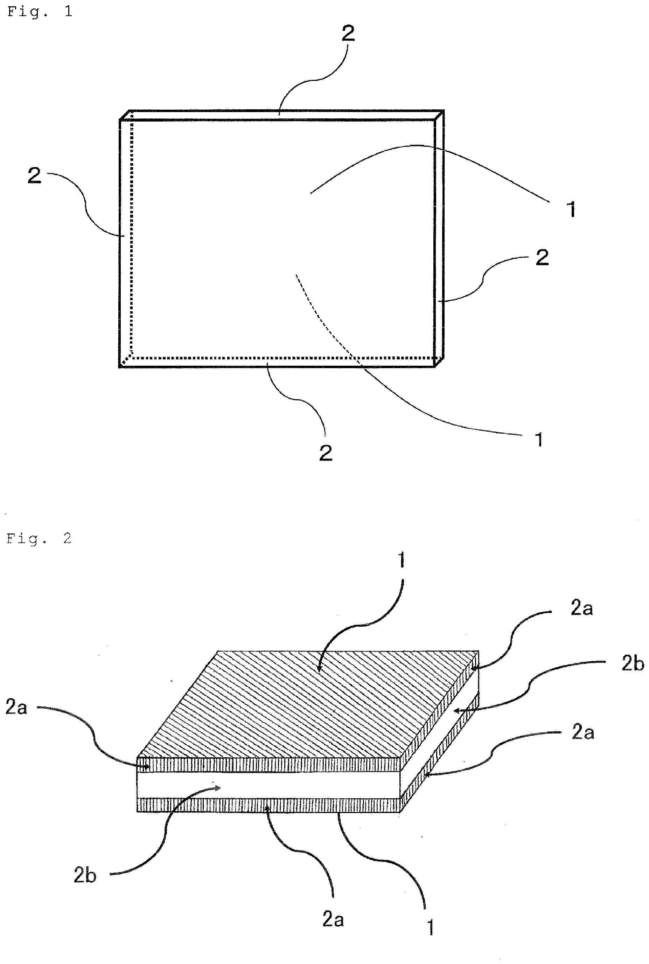

The cover glass is explained based on Figs. 1 and 2 below. The cover glass for display devices according to one embodiment of the present invention has main surface parts 1 where a compressive stress layer is formed and side surface parts (edge parts) 2 composed of regions where a compressive stress layer is formed and regions where no compressive stress layer is formed. According to the present invention, cover glasses are obtained by preliminary performing ion exchange of a glass plate for a cover glass for display devices and cutting the glass plate. For example, the glass plate is a glass plate larger than a desired cover glass, and all the main surface parts and all the side surface parts of the glass plate are chemically strengthened before cutting. This chemically strengthened glass plate can be cut into a plurality of cover glasses by the cutting. Thus, a plurality of cover glasses can be efficiently produced at the same time from a single large glass plate. The cover glasses obtained by cutting a glass plate have side surface parts 2 composed of regions 2a where a compressive stress layer is formed and regions 2b where no compressive stress layer is formed.

The region 2a where a compressive stress layer is formed is continuous with the main surface part 1, and the region 2b where no compressive stress layer is formed is continuous with the regions 2a where a compressive stress layer is formed. That is, the region 2b where no compressive stress layer is formed in the side surface part 2 is located between the regions 2a where a compressive stress layer is formed on the main surface parts 1. In such a structure, the region 2b where no compressive stress layer is formed in the side surface part 2 is protected between the regions 2a where a compressive stress layer is continuously formed from the main surface parts 1. Such side surface parts 2, of the cover glass, where no compressive stress is formed are not exposed. Therefore, the mechanical strength of the side surface parts 2 can be sufficiently maintained.

The side surface parts 2 of the cover glass are preferably faces formed by physical processing (not only cutting or breaking, but also chamfering) such as laser scribing, mechanical scribing, and brush polishing, or chemical processing (chemical cutting) using a hydrofluoric acid solution.

The main surface parts 1 of the cover glass for display devices according to one embodiment of the present invention may be provided with anti-fingerprint properties, anti-glare properties, or desired functions by surface coating with a chemical, microprocessing, attaching a film to the surface, or the like. Alternatively, on the main surface part, an indium tin oxide (ITO) membrane and then a touch sensor may be formed, or printing may be performed according to the color of the display devices. The main surface parts 1 may be partially subjected to a processing for making holes or the like. The shape and size of these cover glasses may not be limited to simple rectangular shapes, and various shapes according to the designed shape of the display devices are acceptable such as processed rectangular shapes with round corners.

In the cover glass for display devices according to one embodiment of the present invention, the depth of the compressive stress layer formed in the main surface part 1 and the region 2a where a compressive stress layer is formed in the side surface part 2 is 6 to 15 µm, preferably 8 to 13 µm, and more preferably 9 to 12 µm in view of damage resistance and cutting processability.

The depth of the compressive stress layer formed through ion exchange herein is measured by photoelasticity using a surface stress meter based on an optical waveguide effect. The measurement using a surface stress meter requires the refraction index and photoelasticity constant according to the glass composition of the glass before ion exchange. The same shall apply to the measurement of a surface compressive stress.

In the cover glass for display devices according to one embodiment of the present invention, a shape parameter determined in accordance with JIS R 1625 (1996) based on analysis of a fracture stress of the cover glass measured by the coaxial double ring test is not less than 7, and strength when a cumulative fracture probability is 1% is not less than 450 MPa.

The sizes and shapes of a specimen, a load ring, and a support ring, and a loading rate in the coaxial double ring test are given according to ISO/DIS (EN) 1288-1 and 1288-5. A calculation method of a fracture stress according to the ISO/DIS (EN) is a method for testing a glass with small warp generated by the coaxial double ring test. Therefore, the cover glass for display devices of the present invention tends to be overvalued by the calculation method. For this reason, conversion of a breakage load into a fracture stress in this specification should be performed, instead of by the above calculation method, in the following ways. An actual tensile principal stress generated at a crack of a glass is actually measured or dynamic simulation using a finite element method for nonlinear problems is performed.

Weibull statistical analysis of the resulting fracture strength obtained by the coaxial double ring test is performed in accordance with JIS R1625 (1996). That is, a shape parameter of two-parameter Weibull distribution function (Weibull modulus) and a scale parameter are calculated by the maximum likelihood estimation. The strength when a cumulative fracture probability is 1% is calculated based on these parameters. The statistical processing is performed based on the resulting fracture strength of desirably not less than 15, more desirably not less than 20, and still more desirably not less than 30. A Weibull plot is prepared using median rank in accordance with the JIS.

In the cover glass for display devices according to one embodiment of the present invention, the shape parameter is not less than 7 and the strength when a cumulative fracture probability is 1% is not less than 450 MPa, and the shape parameter is preferably not less than 8 and the strength when a cumulative fracture probability is 1% is preferably not less than 500 MPa. A larger strength is better, but strength of 700 MPa or 650 MPa provides sufficiently high strength reliability.

In the cover glass for display devices according to one embodiment of the present invention, the surface compressive stress of the main surface part of the glass is preferably not less than 450 MPa, more preferably not less than 550 MPa, and in view of resistance to impacts and damages to the glass, still more preferably not less than 650 MPa. A higher surface compressive stress is preferable, and the upper limit may be 850 MPa, 800 MPa, or 750 MPa.

In the cover glass for display devices according to one embodiment of the present invention, the chemically strengthened glass preferably has a Vickers hardness of 5.0 to 6.0 GPa, more preferably 5.2 to 6.0 GPa, and still more preferably 5.2 to 5.8 GPa. A glass having a Vickers hardness of less than 5.0 GPa has poor damage resistance, and therefore cannot withstand commercial use. On the other hand, a glass having a Vickers hardness of more than 6.0 GPa is difficult to cut.

In the cover glass for display devices according to one embodiment of the present invention, the glass before the ion exchange is made of soda-lime glass substantially composed of SiO₂: 65 to 75%, Na₂O + K₂O: 5 to 20%, CaO: 2 to 15%, MgO: 0 to 10%, and Al₂O₃: 0 to 5% on a mass basis.

The expression "Na₂O + K₂O: 5 to 20%" herein means that the proportional amount of Na₂O and K₂O in total in the glass is 5 to 20% by mass.

SiO₂ is a major constituent of glass. If the proportional amount of SiO₂ is less than 65%, the glass has reduced strength and poor chemical resistance. On the other hand, if the proportional amount of SiO₂ is more than 75%, the glass becomes a highly viscous melt at high temperatures. Such a glass is difficult to form into a shape. Accordingly, the proportional amount should be in the range of 65 to 75%, and preferably 68 to 73%.

Na₂O is an essential component that is indispensable for the chemical strengthening treatment. If the proportional amount of Na₂O is less than 5%, sufficient ions are not exchanged, namely, the chemically strengthening treatment does not improve the strength very much. On the other hand, if the proportional amount is more than 20%, the glass may have poor chemical resistance and poor weather resistance. Accordingly, the proportional amount should be in the range of 5 to 20%, preferably 5 to 18%, and more preferably 7 to 16%. K₂O is not an essential component, but acts as a flux for the glass together with Na₂O upon melting the glass, and acts also as an adjunct component for accelerating ion exchange when added in a small amount. However, when excessive K₂O is used, K₂O produces a mixed alkali effect with Na₂O to inhibit movement of Na⁺ ions. As a result, the ions are less likely to be exchanged. If the proportional amount of K₂O is more than 5%, the strength is less likely to be improved by ion exchange. Accordingly, the proportional amount is preferably not more than 5%. The proportional amount of Na₂O + K₂O is 5 to 20%, preferably 7 to 18%, and more preferably 10 to 17%.

CaO improves the chemical resistance of the glass, and additionally reduces the viscosity of the glass in the molten state. For the purpose of improving the mass productivity of the glass, CaO is preferably present in an amount of not less than 2%. However, if the proportional amount exceeds 15%, it acts to inhibit movement of Na⁺ ions. Accordingly, the proportional amount should be in the range of 2 to 15%, preferably 4 to 13%, and more preferably 5 to 11%.

MgO is not an essential component, but is preferably used in place of a portion of CaO because it is less likely to inhibit movement of Na⁺ ions than CaO. MgO, however, is not as effective as CaO in reducing the viscosity of the glass in the molten state. When MgO is used in an amount of more than 10%, it allows the glass to become highly viscous, which is a contributing factor to poor mass productivity of the glass. Accordingly, the proportional amount should be in the range of 0 to 10%, preferably 0 to 8%, and more preferably 1 to 6%.

Al₂O₃ is not an essential component, but improves the strength and the ion exchange capacity. If the proportional amount of Al₂O₃ is more than 5% on a mass basis, the glass becomes a highly viscous melt at high temperatures, and additionally is likely to be devitrified. Such a glass melt is difficult to form into a shape. Moreover, the ion exchange capacity is increased too much, and therefore a deep compressive stress may be formed. As a result, the chemical strengthening may make the glass difficult to cut. Accordingly, the proportional amount should be in the range of 0 to 5%, preferably 1 to 4%, and more preferably 1 to 3% (not including 3).

The glass before the ion exchange is made of soda-lime glass and substantially composed of the above components, but may further contain small amounts, specifically up to 1% in total, of other components such as Fe₂O₃, TiO₂, CeO₂, and SO₃.

The base glass before the ion exchange preferably has a strain point of 450 to 550°C, and more preferably 480 to 530°C. If the glass has a strain point of lower than 450°C, it does not have heat resistance high enough to withstand the chemical strengthening. On the other hand, if the strain point is higher than 550°C, the glass has too high a melting temperature, which means that such glass plates cannot be produced efficiently and increase costs.

The glass before the ion exchange is preferably one formed by common glass forming processes such as a float process, a roll-out process, and a down-draw process. Among these, one formed by a float process is preferable. A glass may be a glass prepared by etching a glass base plate using a hydrofluoric acid solution by a usual method.

The shape of the base glass before the ion exchange is not particularly limited, and is preferably a plate shape. In the case where the glass has a plate shape, it may be a flat plate or a warped plate, and various shapes are included within the scope of the present invention. Shapes such as rectangular shapes and disc shapes are included within the definition of the flat plate in the present invention, and rectangular shapes are preferable among others.

In the cover glass for display devices according to one embodiment of the present invention, the glass is preferably as thin as possible to reduce the weight of final products (e.g. mobile products) and ensure the space for batteries or other components in device products. Unfortunately, however, too thin a glass plate may generate a large stress when it warps. On the other hand, too thick a glass plate increases the weight of final device products and degrades the visibility of display devices. The upper limit of the thickness of the glass is preferably 3 mm, more preferably 2 mm, still more preferably 1.8 mm, and particularly preferably 1.1 mm. The lower limit of the thickness of the glass is preferably 0.05 mm, more preferably 0.1 mm, still more preferably 0.2 mm, and particularly preferably 0.3 mm.

In a method of manufacturing the cover glass for display devices according to one embodiment of the present invention, the ion exchange includes a first step of contacting the glass plate with a first salt that includes Na ions and K ions at a proportion P of the Na ions as expressed as a molar percentage of the total amount of the Na ions and the K ions; and a subsequent second step of contacting the glass plate with a second salt that includes Na ions and K ions at a proportion Q of the Na ions as expressed as a molar percentage of the total amount of the Na ions and the K ions, where the proportion Q is smaller than the proportion P.

Use of such a first salt allows the surface layer of the glass to be modified so that the layer contains both Na ions and K ions, in the first step. It is assumed that the virtual temperature of the glass decreases to make the structure of the glass tight (dense) in this first step. In the subsequent second step, ion exchange between Na ions and K ions occurs in the outermost surface of the glass, and the K ions are three-dimensionally redispersed in the surface layer of the modified glass. It is assumed that a high surface compressive stress generates and microcracks on the surface of a glass are prevented from growing in this second step.

Further, since the composition of the surface layer of the glass is modified through the first step, the relaxation of the compressive stress generated in the second step is prevented. That is, the surface compressive stress generated by ion exchange in the second step is slightly relaxed and mostly left because the glass article has already been subjected to the first step. Therefore, a high surface compressive stress can be obtained.

The expression "contacting a glass plate with a salt" used for the first and second steps means to contact the glass plate with a salt bath or submerge the glass plate in a salt bath. Thus, the term "contact" used herein is intended to include "submerge" as well.

The contact with a salt can be accomplished by, for example, directly applying the salt in a paste form to the glass plate, spraying the salt in an aqueous solution form, submerging the glass plate in a molten salt heated to its melting point or higher. Among these, submerging in a molten salt is preferable.

The salt may be one of or a mixture of two or more of nitrates, sulfates, carbonates, hydroxide salts, and phosphates. A salt containing Na ions may preferably be a sodium nitrate molten salt. A salt containing K ions may preferably be a potassium nitrate molten salt. Therefore, a salt containing Na ions and K ions may preferably be a molten salt composed of a mixture of sodium nitrate and potassium nitrate.

The depth of the compressive stress layer formed through the first step is preferably 5 to 23 µm, as described above. The depth is more preferably 7 to 20 µm and still more preferably 10 to 18 µm. In order to make a compressive stress layer with the above depth, the temperature of the first salt and the period of time for contact of the glass plate with the first salt are controlled depending on the proportion P.

In order to make a compressive stress layer with a depth of 6 to 15 µm through the second step, the temperature of the second salt and the period of time for contact of the glass plate with the second salt are controlled depending on the proportion Q.

If the proportion P in the first salt is too high, the surface of the glass plate is likely to become cloudy, which avoids improvement in reliability of the glass strength. On the contrary, if the proportion P in the first salt is too low, the composition of the surface layer of the glass plate tends to be too much modified, and most Na ions in the glass are ion exchanged with K ions in the first step. As a result, ion exchange in the second step may not be accelerated, failing to give a desired surface compressive stress and desired strength when a fracture probability is 1%. If the proportion P is too low, a deeper compressive stress layer tends to be formed through the first step. This also adversely affects the cutting easiness of the resulting glass. Therefore, the proportion P is preferably 20 to 40 mol% and more preferably 25 to 35 mol%.

If the proportion Q in the second salt is more than 2 mol%, sufficient K ions may not be introduced into the surface layer of the glass in the second step, and driving force of redispersion of K ions tends to be weakened. Therefore, a desired surface compressive stress and desired strength when a fracture probability is 1% cannot be obtained. The proportion Q is preferably 0 to 2 mol% and more preferably 0 to 1 mol%. Thus, the second salt may contain only K ions as a cation, and may not substantially contain Na ions.

Although the first and second salts are each a pure salt of Na ions and/or K ions in the above description, this embodiment does not preclude the presence of stable metal oxides, impurities, and other salts that do not react with the salts, provided that they do not impair the purpose of the present invention. For example, the first or second salt may contain Ag ions or Cu ions as long as the proportion Q is in the range of 0 to 2 mol%.

At too high a temperature in the first step (temperature of the first salt), the surface of the glass tends to become cloudy, which avoids improvement of the reliability of the glass strength. Further, a deeper compressive stress layer may be formed, which may adversely affect the cutting easiness of the resulting glass. The compressive stress generated in the first step tends to relax. On the contrary, at too low a first salt temperature, ion exchange in the first step may not be accelerated, which avoids formation of a compressive stress layer having a desired depth. Further, the glass structure is less likely to be thermally rearranged, and the effect of modifying due to the virtual temperature of the glass is less likely to be obtained, whereby the structure of the glass does not become tight. The temperature of the first salt is preferably 0.8 times to 1.05 times the strain point of the glass plate before the ion exchange, more preferably 0.83 times to 1.0 time, and still more preferably 0.87 times to 1.0 time.

Chemical strengthening is intended to generate a compressive stress using a difference between ionic radii of two types of ions replaced each other by ion exchange. Therefore, the temperature of the first salt should not exceed the annealing point of the glass plate before the ion exchange.

Too high a temperature in the second step may relax, in the second step (temperature of the second salt), the compressive stress generated in the first step. In addition, a deeper compressive stress layer may be formed, which may adversely affect the cutting easiness of the resulting glass. On the other hand, too low a second salt temperature fails to accelerate ion exchange in the second step. Consequently, a high surface compressive stress may not be generated in the second step, and K ions are less likely to be redispersed, failing to give a compressive stress layer having a desired depth and desired strength when a fracture probability is 1%. Therefore, the temperature of the second salt is preferably the same or lower than the temperature of the first salt, and more preferably lower than the temperature of the first salt. Further, the temperature of the second salt is preferably not less than 390°C, more preferably not less than 400°C, and still more preferably not less than 420°C.

A total time period of the contact of the glass plate with the first salt in the first step and the contact of the glass plate with the second salt in the second step is preferably 1 to 12 hours and more preferably 2 to 6 hours.

Specifically, too long a contact of the glass plate with the first salt tends to relax the compressive stress generated in the first step, and additionally tends to provide a deeper compressive stress layer. This adversely affects the cutting easiness of the resulting glass. On the other hand, too short a contact of the glass plate with the first salt may not produce a sufficient effect of modifying the surface layer of the glass in the first step, and therefore tends to cause stress relaxation in the second step.

Therefore, the time period of the contact of the glass plate with the first salt in the first step is preferably 0.5 to 8 hours, more preferably 1 to 6 hours, and still more preferably 1 to 4 hours.

In the second step, it is preferable to reduce the relaxation of the stress generated by the ion exchange to a minimum. However, a longer contact of the glass plate with the salt increases the relaxation of the stress. Additionally, a longer contact tends to provide a deeper compressive stress layer in the second step. This also adversely affects the cutting easiness of the resulting glass. On the other hand, too short a contact of the glass plate with the second salt fails to allow the alkali metal ions A and the alkali metal ions B to be exchanged sufficiently, and therefore a desired compressive stress may not be generated.

Therefore, the time period of the contact of the glass plate with the second salt in the second step is preferably 0.5 to 8 hours, more preferably 0.5 to 6 hours, and still more preferably 0.5 to 3 hours.

### EXAMPLES

The following examples are offered to more specifically illustrate the embodiment of the present invention. It should be noted that the present invention is not limited only to these examples.

### (Example 1)

### (1) Preparation of chemically strengthened glass and evaluation of surface compressive stress and depth of compressive stress layer

As a glass plate before ion exchange (chemical strengthening), a 0.7-mm thick soda-lime glass plate with 400 mm × 500 mm sizes (SiO₂: 71. 6%, Na₂O: 12.5%, K₂O: 1.3%, CaO: 8.5%, MgO: 3.6%, Al₂O₃: 2.1%, Fe₂O₃: 0.10%, SO₃: 0.3% (on a mass basis), the strain point of the plate glass was 503°C) (hereinafter, referred to as glass base plate) was produced by a float process.

The glass base plate prepared above was submerged in a molten salt (first salt, proportion P: 34.7 mol%) bath composed of a mixture of 65.3 mol% of potassium nitrate and 34.7 mol% of sodium nitrate at a constant temperature of 475°C for 120 minutes, as a first step. The glass base plate was then taken out from the bath and gradually cooled, and the surface of the glass base plate was washed and dried.

In a subsequent second step, the dried glass base plate was submerged in a molten salt (second salt, proportion Q: 0.1 mol%) bath substantially composed of a mixture of 99.9 mol% of potassium nitrate and 0.1 mol% of sodium nitrate at a constant temperature of 435°C for 60 minutes. The glass base plate was then taken out from the bath and gradually cooled, and the surface of the glass base plate was washed and dried.

The obtained chemically strengthened glass base plate was measured for the surface compressive stress and the depth of the compressive stress layer formed at the surface of the glass using a surface stress meter (FSM-60V, produced by Toshiba Glass Co., Ltd. (currently Orihara Industrial Co., Ltd.)). The refraction index and photoelasticity constant of the glass composition of the soda-lime glass used for the measurement with the surface stress meter were 1.52 and 26.8 ((nm/cm)/MPa), respectively. The results of the measurement show that the surface compressive stress was 675 MPa and the depth of the compressive stress layer was 12 µm. The depth of the compressive stress layer formed through the first step was 14 µm.

### (2) Cutting of chemically strengthened glass

The chemically strengthened glass base plate was cut into a plurality of 66-mm-square glasses as shown in Figs. 1 and 2 using a mechanical scriber having a carbide wheel glass cutter.

### (3) Evaluation of strength reliability

### (3-1) Measurement of fracture stress by coaxial double ring test

Each chemically strengthened cut glass was measured for a fracture stress.

The sizes and shapes of a specimen, a load ring, and a support ring, and a loading rate in the coaxial double ring test are given according to ISO/DIS (EN) 1288-1 (Glazing in Building-Determination of the bending strength of glass- Part 1: Fundementals of testing glass) and 1288-5 (Part 5: Coaxial double ring test on flat specimens with small or medium test surface areas) . Specifically, a 66-mm square specimen was used, and a load ring having a radius of 6 mm and a support ring having a radius of 30 mm were used, and a loading rate was set to 1.6 to 2.4 MPa/sec. The loading rate varied depending on warp generated in a glass specimen during the coaxial double ring test, and a crosshead speed was therefore controlled so that the loading rate when the glass breaks satisfies the above range.

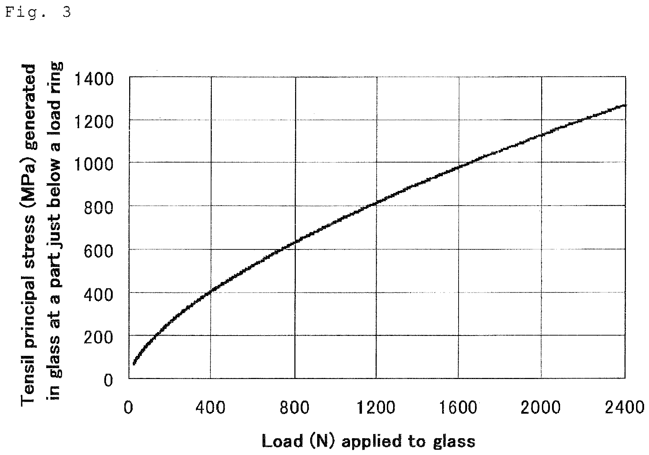

The calculation method of a fracture stress according to the ISO/DIS (EN) is a method for testing a glass with small warp generated by the coaxial double ring test. Therefore, the cover glass for display devices of the present invention having a high strength tends to be overvalued because of the high warp of the cover glass. In the present example, rosette analysis was performed using triaxial strain gauges to determine a principal stress generated at a broken part of the cover glass. A calibration curve for converting a load (applied load) applied to the cover glass into the principal stress (generated stress) was prepared. In this test, most of the specimens were broken at a part just below a load ring. Therefore, the calibration curve prepared is as for the part just below a load ring. Specimens broken at the part were counted as "available". Fig. 3 shows a calibration curve as for a part just below a load ring.

In the above procedures, the fracture stresses (surface strength) of the chemically strengthened cut glasses were measured by the coaxial double ring test. 56 specimens are available.

### (3-2) Evaluation of shape parameter and strength when fracture probability is 1%

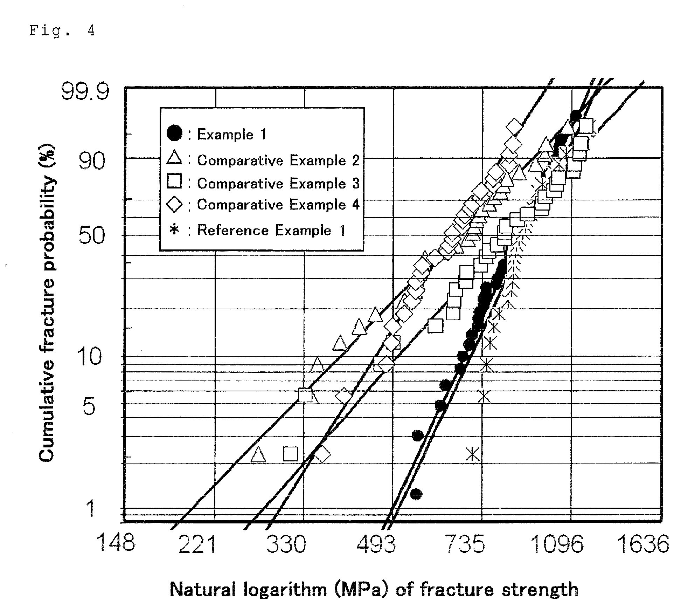

Statistical analysis of the resulting strength was performed by maximum likelihood estimation in accordance with JIS R1625 (1996) (Weibull statistics of strength data for fine ceramics) . The results show that a shape parameter m (Weibull modulus) was 7.43 and a scale parameter σ₀ was 919 MPa. The shape parameter and the scale parameter were written to three significant figures in accordance with the JIS. The fracture stress when a cumulative fracture probability was 1%, that is, the strength when a cumulative fracture probability was 1% was calculated based on these parameters to be 495 MPa. Fig. 4 shows a Weibull plot showing the relationship between a cumulative fracture probability (%) and a fracture stress (MPa) (Fig. 4 also shows Weibull plots of Comparative Examples 2 to 4 and Reference Example 1). The resulting strengths were ranked using median rank.

### (Example 2)

Chemically strengthened cut glasses were prepared as in Example 1 except that the thickness of the glass base plate was changed and the temperature of the first salt was set at 470°C, and evaluated. The depth of the compressive stress layer formed through the first step, the surface compressive stress, and the depth of the compressive stress layer of each glass were measured as in Example 1 to be 12 µm, 683 MPa, and 10 µm, respectively. The shape parameter and the strength when a cumulative fracture probability was 1% determined as in Example 1 were 8.07 and 512 MPa, respectively.

### (Example 3)

Chemically strengthened cut glasses were prepared as in Example 2 except that the thickness of the glass base plate was changed, and evaluated. The depth of the compressive stress layer formed through the first step, the surface compressive stress, and the depth of the compressive stress layer of each glass were measured as in Example 1 to be 12 µm, 677 MPa, and 11 µm, respectively. The shape parameter and the strength when a cumulative fracture probability was 1% determined as in Example 1 were 11.5 and 578 MPa, respectively.

### (Example 4)

Chemically strengthened cut glasses were prepared as in Example 2 except that a glass with an outermost surface etched tens of micrometers deep using a hydrofluoric acid solution was used as the glass base plate before ion exchange (chemical strengthening), and evaluated. The depth of the compressive stress layer formed through the first step, the surface compressive stress, and the depth of the compressive stress layer of each glass were measured as in Example 1 to be 12 µm, 665 MPa, and 10 µm, respectively. The shape parameter and the strength when a cumulative fracture probability was 1% determined as in Example 1 were 9.21 and 538 MPa, respectively.

### (Example 5)

A glass base plate was prepared as in Example 2 except that the thickness of the glass base plate was changed. The glass base plate prepared above was submerged in a molten salt (first salt, proportion P: 20.0 mol%) bath composed of a mixture of 80.0 mol% of potassium nitrate and 20.0 mol% of sodium nitrate at a constant temperature of 485°C for 120 minutes, as a first step. Other operations were performed as in Example 1. In a subsequent second step, the resulting glass base plate was submerged in a molten salt (second salt, proportion Q: 0.0 mol%) bath substantially composed of 100.0% potassium nitrate at a constant temperature of 450°C for 60 minutes. Other operations were performed as in Example 1.

Chemically strengthened cut glasses of Example 5 were prepared as in Example 1. The surface compressive stress and the depth of the compressive stress layer of each glass were 680 MPa and 13 µm, respectively. The depth of the compressive stress layer formed through the first step was 15 µm. The shape parameter and the strength when a cumulative fracture probability was 1% determined as in Example 1 were 12.1 and 575 MPa, respectively.

In Table 1, the surface compressive stresses, the depths of the compressive stress layers, the depths of the compressive stress layers formed through the first step, the shape parameters, the scale parameters, and the strengths when a cumulative fracture probability was 1% of the cover glasses for display devices of Examples 1 to 5 were listed.

**[Table 1]**

| | Example 1 | Example 2 | Example 3 | Example 4 | Example 5 | Comparative Example 1 | Comparative Example 2 | Comparative Example 3 | Comparative Example 4 | Reference Example 1 |
|---|---|---|---|---|---|---|---|---|---|---|
| Composition | Soda lime | Soda lime | Soda lime | Soda lime | Soda lime | Soda lime | Soda lime | Soda lime | Soda lime | Aluminosilicate |
| Thickness (mm) | 0.7 | 0.5 | 1.1 | 0.7 | 1.1 | 0.7 | 0.7 | 0.7 | 0.5 | 0.7 |
| Surface compressive stress (MPa) | 675 | 683 | 677 | 665 | 680 | | 470 | 619 | 525 | 650 |
| Depth of compressive stress layer (*µ*m) | 12 | 10 | 11 | 10 | 13 | | 12 | 12 | 17 | 42 |
| Depth of compressive stress layer formed through first step (*µ* m) | 14 | 12 | 12 | 12 | 15 | | | | | |
| Number of available samples | 56 | 30 | 30 | 32 | 18 | 29 | 30 | 30 | 30 | 30 |
| Shaped parameter | 7.43 | 8.07 | 11.5 | 9.21 | 12.1 | 2.42 | 3.55 | 3.92 | 5.47 | 7.37 |
| Scale parameter (MPa) | 919 | 905 | 864 | 886 | 840 | 323 | 731 | 896 | 690 | 948 |
| Strength when cumulative fracture probability is 1% (MPa) | 495 | 512 | 578 | 538 | 575 | 48 | 200 | 278 | 298 | 508 |

As shown in Table 1, the chemically strengthened cut glasses of Examples 1 to 5 each have a shape parameter of not less than 7 and strength when a cumulative fracture probability is 1% of not less than 450 MPa, which indicates that the chemically strengthened cut glasses have excellent surface-strength reliability. This is because the surface layer of the glass is more uniformly chemically strengthened by performing ion exchange including the first and second steps, and the glass has a high surface compressive stress.

The chemically strengthened cut glasses evaluated in Examples 1 to 5 have both cutting processability and strength reliability, and are therefore suitable for a cover glass having a shape shown in Figs. 1 and 2 obtained by cutting a chemically strengthened mother glass.

### (Comparative Example 1)

A glass base plate was prepared as in Example 1. The glass base plate was cut into cut glasses as in Example 1 before the glass base plate was chemically strengthened. The coaxial double ring test was performed on each cut glass as in Example 1 to evaluate the strength properties. As a result, the shape parameter and the strength when a cumulative fracture probability was 1% were 2. 42 and 48 MPa, respectively. The cut glasses were not suitable for a cover glass for display devices because of its poor strength reliability.

### (Comparative Example 2)

A glass base plate was prepared as in Example 1. The glass base plate was submerged in a molten salt containing about 97 mol% of potassium nitrate at a constant temperature of 475°C for 70 minutes to prepare a chemically strengthened glass base plate. In Comparative Example 2, a widely known chemical strengthening including "submerging a glass base plate in a molten salt (generally containing impurities) substantially composed of a potassium nitrate molten salt" was used instead of the ion exchange including the first and second steps described in Examples 1 to 5. The surface compressive stress and the depth of the compressive stress layer were measured to be 470 MPa and 12 µm, respectively.

Chemically strengthened cut glasses were prepared from a chemically strengthened glass base plate as in Example 1. Evaluation of the strength by the coaxial double ring test showed that the shape parameter and the strength when a cumulative fracture probability was 1% were 3.55 and 200 MPa, respectively.

### (Comparative Example 3)

A glass base plate was prepared as in Example 1. The glass base plate was submerged in a molten salt containing about 99.5 mol% of potassium nitrate at a constant temperature of 465°C for 90 minutes to prepare a chemically strengthened glass base plate. The surface compressive stress and the depth of the compressive stress layer were measured as in Example 1 to be 619 MPa and 12 µm, respectively.

The chemically strengthened glass base plate was cut into glasses, and the strength of each glass was evaluated by the coaxial double ring test as in Example 1. As a result, the shape parameter and the strength when a cumulative fracture probability was 1% were 3.92 and 278 MPa, respectively.

### (Comparative Example 4)

A glass base plate was prepared as in Example 1 except that the thickness of the glass base plate was changed. The glass base plate prepared above was submerged in a molten salt (first salt, proportion P: 65.3 mol%) bath composed of a mixture of 34.7 mol% of potassium nitrate and 65.3 mol% of sodium nitrate at a constant temperature of 505°C for 120 minutes, as a first step. Other operations were performed as in Example 1. In a subsequent second step, the resulting glass base plate was submerged in a bath (second salt, proportion Q: 0.1 mol%) substantially composed of a mixture of 99.9 mol% of potassium nitrate and 0.1 mol% of sodium nitrate at a constant temperature of 495°C for 60 minutes. Other operations were performed as in Example 1. The surface compressive stress and the depth of the compressive stress layer of the obtained chemically strengthened glass base plate were measured to be 525 MPa and 17 µm, respectively. The temperatures of the salts in the first and second steps were higher than those of the salts used in Example 1. Therefore, the relaxation of the generated compressive stress tended to accelerate and a deeper compressive stress layer tended to be formed.

The chemically strengthened glass base plate was able to be cut into glasses as in Example 1, but the yield of the glasses were slightly lower than that in Example 1. This is because the compressive stress layer, which is deeper than that in Example 1, prevents formation of a scribe line in the glass base plate.

The shape parameter and the strength when a cumulative fracture probability was 1% determined as in Example 1 were 5.47 and 298 MPa, respectively.

In Table 1, the surface compressive stresses, the depths of the compressive stress layers, the shape parameters, the scale parameters, and the strengths when a cumulative fracture probability was 1% of the cover glasses for display devices of Comparative Examples 1 to 4 were listed. Weibull plots of Comparative Examples 2 to 4 were shown in Fig. 4.

The cover glass of Comparative Example 2 was prepared only through one-step chemical strengthening. Therefore, the surface layer of the glass was not uniformly ion exchanged, and had a lower surface compressive stress as compared to the cover glasses of Examples 1 to 5. For this reason, such a cover glass may not have excellent strength reliability.

The surface compressive stress of the cover glass of Comparative Example 3 was higher than that in Comparative Example 2, and approaches the surface compressive stresses in Examples 1 to 5. However, since the cover glass of Comparative Example 3 was prepared only through one-step chemical strengthening, the uniformity of ion exchange of the surface layer was poor, and excellent strength reliability was not achieved.

The cover glass of Comparative Example 4 was prepared through the first and second steps, but tends to have a deeper compressive stress layer than those in Examples 1 to 5, which is accompanied by relaxation of the surface compressive stress . Therefore, excellent strength reliability was not achieved in such a cover glass. Further, it is more difficult to cut the chemically strengthened glass than those in Examples 1 to 5.

### (Reference Example 1)

An aluminosilicate base glass plate generally regarded to be suitable for chemical strengthening was submerged in a molten salt substantially composed only of 100% of potassium nitrate at a constant temperature of 470°C for 75 minutes to prepare a chemically strengthened glass plate. The surface compressive stress and the depth of the compressive stress layer of the chemically strengthened glass plate were measured to be 652 MPa and 33 µm, respectively. In the measurement, the refraction index of 1.51 and the photoelasticity constant of 29.4 ((nm/cm)/MPa) as the properties of aluminosilicate were used.

The chemically strengthened glass base plate was not able to be cut unlike the glass of Example 1 because any crack for scribing was not formed on the glass, or even if a crack was able to be formed on the glass, the glass did not split along the crack, that is, broke along an unintended direction. Further, since the chemically strengthened glass was not able to be cut, a cut glass of the chemically strengthened glass with a shape shown in Figs. 1 and 2 was not obtained, and the strength of a chemically strengthened cut glass was unmeasurable.

Therefore, chemical strengthening was performed in a manner different from the manner in Example 1 in which a chemically strengthened single large glass plate was cut into cut glasses. That is, a glass base plate was cut into cut glasses first before it was chemically strengthened, and the cut glasses were then ion exchanged. Specifically, the aluminosilicate glass not ion exchanged at this time for chemical strengthening was cut into 66-mm square glasses before ion exchange as in Example 1. The glasses were then chemically strengthened by submerging them into a molten salt bath substantially composed of 100 mol% potassium nitrate at a constant temperature of 480°C for 90 minutes. The surface compressive stress and the depth of the compressive stress layer of the obtained chemically strengthened glass base plate were measured to be 650 MPa and 42 µm, respectively. Through these steps, chemically strengthened cut glasses of Reference Example 1 were prepared. Unlike Examples 1 to 5, a compressive stress layer was formed in the entire region of each side surface part of each chemically strengthened cut glass of Reference Example 1.

It is considered that thus obtained glasses made of aluminosilicate glass for chemical strengthening are suitable for a cover glass in view of strength reliability because such glasses have a high compressive stress and a deep compressive stress layer. However, such aluminosilicate glass is too efficiently ion exchanged to be appropriately cut. Therefore, use of aluminosilicate glass is not suitable for efficient mass production in which small size cover glasses are produced from a chemically strengthened single large glass.

Next, the coaxial double ring test was performed on the chemically strengthened cut glass of Reference Example 1 as in Example 1 to evaluate the strength properties. The evaluation showed that the shape parameter and the strength when a cumulative fracture probability was 1% were 7.37 and 508 MPa, respectively.

Comparison of Examples 1 to 5 and Reference Example 1 (see Table 1 and Fig. 4) showed that although the chemically strengthened glass (cover glass for display devices) of the present invention is a glass made of commonly-used soda-lime glass, which is not suitable for chemical strengthening in view of composition, the glass has excellent strength reliability similar to those according to Reference Example 1, and excellent cutting processability.

### REFERENCE SIGNS LIST

1 Main surface part of glass
2 Side surface part of glass
2a Region where compressive stress layer is formed
2b Region where no compressive stress layer is formed

## Claims

1. A cover glass for display devices, comprising:
a chemically strengthened glass manufactured by ion exchange of a surface layer of a glass plate to replace Na ions with K ions,
the cover glass having a main surface part in which a compressive stress layer is formed and a side surface part that has a region where the compressive stress layer is formed and a region where no compressive stress layer is formed,
the compressive stress layer having a depth of 6 to 15 µm,
wherein a shape parameter determined in accordance with JIS R 1625 (1996) based on analysis of a fracture stress of the cover glass measured by a coaxial double ring test is not less than 7, and strength of the cover glass when a cumulative fracture probability is 1% is not less than 450 MPa; and
the glass plate before the ion exchange is made of soda-lime glass substantially composed of SiO₂: 65 to 75%, Na₂O + K₂O: 5 to 20%, CaO: 2 to 15%, MgO: 0 to 10%, and Al₂O₃: 0 to 5% on a mass basis.

2. The cover glass for display devices according to claim 1,
wherein the main surface part has a surface compressive stress of not less than 450 MPa.

3. The cover glass for display devices according to claim 1 or 2,
wherein the ion exchange includes a first step of contacting the glass plate with a first salt that includes Na ions and K ions at a proportion P of the Na ions as expressed as a molar percentage of the total amount of the Na ions and the K ions; and
a subsequent second step of contacting the glass plate with a second salt that includes Na ions and K ions at a proportion Q of the Na ions as expressed as a molar percentage of the total amount of the Na ions and the K ions, where the proportion Q is smaller than the proportion P.

4. The cover glass for display devices according to any one of claims 1 to 3, wherein the thickness of the glass plate is 0.05 to 1.1 mm.

5. A glass plate for a cover glass for display devices, comprising:
a chemically strengthened glass plate manufactured by ion exchange of a surface layer of a glass plate to replace Na ions with K ions, the glass plate having a compressive stress layer with a depth of is 6 to 15 µm,
wherein a shape parameter determined in accordance with JIS R 1625 (1996) based on analysis of a fracture stress of the glass plate measured by a coaxial double ring test is not less than 7, and strength of the glass plate when, a cumulative fracture probability is 1% is not less than 450 MPa, and
the glass plate before the ion exchange is made of soda-lime glass substantially composed of SiO₂: 65 to 75%, Na₂O + K₂O: 5 to 20%, CaO: 2 to 15%, MgO: 0 to 10%, and Al₂O₃: 0 to 5% on a mass basis.

6. The glass plate for a cover glass for display devices according to claim 5, wherein the thickness of the glass plate is 0.05 to 1.1 mm.

7. A method of manufacturing the cover glass for display devices according to any one of claims 1 to 4, comprising the steps of:
performing ion exchange of a surface layer of a glass plate to replace Na ions with K ions; and
cutting the glass plate,
the ion exchange including a first step of contacting the glass plate with a first salt that includes Na ions and K ions at a proportion P of the Na ions as expressed as a molar percentage of the total amount of the Na ions and the K ions; and
a subsequent second step of contacting the glass plate with a second salt that includes Na ions and K ions at a proportion Q of the Na ions as expressed as a molar percentage of the total amount of the Na ions and the K ions, where the proportion Q is smaller than the proportion P.

8. The method according to claim 7,
wherein the compressive stress layer formed at a surface of the glass plate through the first step has a depth of 5 to 23 µm.

9. The method according to claim 7 or 8,
wherein the proportion P is 20 to 40 mol%.

10. The method according to any one of claims 7 to 9,
wherein the proportion Q is 0 to 2 mol%.

11. The method according to any one of claims 7 to 10,
wherein the temperature of the first salt is 0.8 to 1.05 times the strain point of the glass plate before the ion exchange.

12. The method according to any one of claims 7 to 11,
wherein the temperature of the second salt is lower than the temperature of the first salt.

13. The method according to any one of claims 7 to 12, wherein the thickness of the glass plate is 0.05 to 1.1 mm.

14. Use of the glass plate of claim 5 or 6 as a cover glass for display devices.

15. Use according to claim 14, wherein the display device is of an electronic device selected from mobile phones, smart phones and tablet computers.

## Patentansprüche

1. Ein Deckglas für Anzeigevorrichtungen, umfassend:
ein chemisch gehärtetes Glas, hergestellt durch Ionenaustausch einer Oberflächenschicht einer Glasplatte, um Na-Ionen durch K-Ionen zu ersetzen,
wobei das Deckglas einen Hauptoberflächenteil aufweist, in dem eine Druckspannungsschicht ausgebildet ist und einen Seitenoberflächenteil, der einen Bereich aufweist, in dem die Druckspannungsschicht ausgebildet ist, und einen Bereich, in dem keine Druckspannungsschicht ausgebildet ist,
wobei die Druckspannungsschicht eine Tiefe von 6 bis 15 µm aufweist,
wobei ein Formparameter, der gemäß JIS R 1625 (1996) basierend auf der Analyse einer durch einen koaxialen Doppelringtest gemessenen Bruchspannung des Deckglases bestimmt ist, nicht weniger als 7 beträgt, und die Festigkeit des Deckglases, wenn eine kumulative Bruchwahrscheinlichkeit 1% beträgt, nicht weniger als 450 MPa beträgt, und
die Glasplatte vor dem Ionenaustausch aus Natronkalkglas gemacht ist, das sich im Wesentlichen zusammensetzt aus SiO₂; 65 bis 75%, Na₂O + K₂O: 5 bis 20%, CaO: 2 bis 15%, MgO: 0 bis 10% und Al₂O₃: 0 bis 5% auf Massenbasis.

2. Das Abdeckglas für Anzeigevorrichtungen gemäß Anspruch 1,
wobei der Hauptoberflächenteil eine Oberflächendruckspannung von nicht weniger als 450 MPa aufweist.

3. Das Abdeckglas für Anzeigevorrichtungen gemäß Anspruch 1 oder 2,
wobei der Ionenaustausch einen ersten Schritt des Inkontaktbringens der Glasplatte mit einem ersten Salz, das Na-Ionen und K-Ionen beinhaltet, mit einem Anteil P der Na-Ionen, ausgedrückt als Molprozentsatz der Gesamtmenge der Na-Ionen und der K-Ionen; und
einen anschließenden zweiten Schritt des Inkontaktbringens der Glasplatte mit einem zweiten Salz, das Na-Ionen und K-Ionen beinhaltet, mit einem Anteil Q der Na-Ionen, ausgedrückt als Molprozentsatz der Gesamtmenge der Na-Ionen und der K-Ionen, wobei der Anteil Q kleiner als der Anteil P ist.

4. Das Abdeckglas für Anzeigevorrichtungen gemäß einem der Ansprüche 1 bis 3, wobei die Dicke der Glasplatte 0,05 bis 1,1 mm beträgt.

5. Eine Glasplatte für ein Deckglas für Anzeigevorrichtungen, umfassend:
eine chemisch gehärtete Glasplatte, die durch Ionenaustausch einer Oberflächenschicht einer Glasplatte hergestellt ist, um Na-Ionen durch K-Ionen zu ersetzen, wobei die Glasplatte eine Druckspannungsschicht mit einer Tiefe von 6 bis 15 µm aufweist,
wobei ein Formparameter, der gemäß JIS R 1625 (1996) auf der Grundlage einer Analyse einer durch einen koaxialen Doppelringtest gemessenen Bruchspannung der Glasplatte bestimmt wird, nicht weniger als 7 beträgt und die Festigkeit der Glasplatte, wenn eine kumulative Bruchwahrscheinlichkeit 1% beträgt, nicht weniger als 450 MPa beträgt, und
die Glasplatte vor dem Ionenaustausch aus Natronkalkglas gemacht ist, das sich im Wesentlichen zusammensetzt aus SiO₂: 65 bis 75%, Na₂O + K₂O: 5 bis 20%, CaO: 2 bis 15%, MgO: 0 bis 10% und Al₂O₃: 0 bis 5% auf Massenbasis.

6. Die Glasplatte für ein Deckglas für Anzeigevorrichtungen gemäß Anspruch 5, wobei die Dicke der Glasplatte 0,05 bis 1,1 mm beträgt.

7. Ein Verfahren zum Herstellen des Deckglases für Anzeigevorrichtungen gemäß einem der Ansprüche 1 bis 4, umfassend die Schritte:
Durchführen eines Ionenaustauschs einer Oberflächenschicht einer Glasplatte, um Na-Ionen durch K-Ionen zu ersetzen; und
Schneiden der Glasplatte,
wobei der Ionenaustausch einen ersten Schritt des Inkontaktbringens der Glasplatte mit einem ersten Salz, das Na-Ionen und K-Ionen beinhaltet, mit einem Anteil P der Na-Ionen, ausgedrückt als Molprozentsatz der Gesamtmenge der Na-Ionen und der K-Ionen; und
einen anschließenden zweiten Schritt des Inkontaktbringens der Glasplatte mit einem zweiten Salz, das Na-Ionen und K-Ionen beinhaltet, mit einem Anteil Q der Na-Ionen, ausgedrückt als Molprozentsatz der Gesamtmenge der Na-Ionen und der K-Ionen, wobei der Anteil Q kleiner als der Anteil P ist, einschließt.

8. Das Verfahren gemäß Anspruch 7,
wobei die Druckspannungsschicht, die an einer Oberfläche der Glasplatte durch den ersten Schritt gebildet wird, eine Tiefe von 5 bis 23 µm aufweist.

9. Das Verfahren gemäß Anspruch 7 oder 8,
wobei der Anteil P 20 bis 40 Mol-% beträgt.

10. Das Verfahren gemäß einem der Ansprüche 7 bis 9,
wobei der Anteil Q 0 bis 2 Mol% beträgt.

11. Das Verfahren gemäß einem der Ansprüche 7 bis 10,
wobei die Temperatur des ersten Salzes das 0,8 bis 1,05-fache des Entspannungspunktes der Glasplatte vor dem Ionenaustausch ist.

12. Das Verfahren gemäß einem der Ansprüche 7 bis 11,
wobei die Temperatur des zweiten Salzes niedriger als die Temperatur des ersten Salzes ist.

13. Das Verfahren gemäß einem der Ansprüche 7 bis 12, wobei die Dicke der Glasplatte 0,05 bis 1,1 mm beträgt.

14. Verwendung der Glasplatte nach Anspruch 5 oder 6 als Deckglas für Anzeigevorrichtungen.

15. Verwendung gemäß Anspruch 14, wobei die Anzeigevorrichtung eine elektronische Vorrichtung, ausgewählt aus Mobiltelefonen, Smartphones und Tablet-Computern, ist.

## Revendications

1. Verre protecteur pour dispositifs d'affichage, comprenant :
un verre trempé chimiquement fabriqué par échange d'ions d'une couche de surface d'une plaque de verre pour remplacer des ions Na par des ions K,
le verre protecteur ayant une partie de surface principale dans laquelle une couche de contrainte de compression est formée et une partie de surface latérale qui a une région où la couche de contrainte de compression est formée et une région où aucune couche de contrainte de compression n'est formée,
la couche de contrainte de compression ayant une profondeur de 6 à 15 µm,
dans lequel un paramètre de forme, déterminé conformément à la norme JIS R 1625 (1996) sur la base de l'analyse d'une contrainte de rupture du verre protecteur mesurée par un test à anneau double coaxial, n'est pas inférieur à 7, et la résistance du verre protecteur quand la probabilité cumulée de rupture est de 1 % n'est pas inférieure à 450 MPa ; et
la plaque de verre avant l'échange d'ions est faite de verre sodocalcique principalement composé de SiO₂ : 65 à 75 %, Na₂O + K₂O : 5 à 20 %, CaO : 2 à 15 %, MgO : 0 à 10 %, et Al₂O₃ : 0 à 5 % sur une base en poids.

2. Verre protecteur pour dispositifs d'affichage selon la revendication 1, dans lequel la partie de surface principale a une contrainte de compression en surface non inférieure à 450 MPa.

3. Verre protecteur pour dispositifs d'affichage selon la revendication 1 ou 2, dans lequel l'échange d'ions comprend
une première étape de mise en contact de la plaque de verre avec un premier sel qui contient des ions Na et des ions K en une proportion P des ions Na telle qu'exprimée en pourcentage molaire de la quantité totale des ions Na et des ions K ; et
une deuxième étape subséquente de mise en contact de la plaque de verre avec un deuxième sel qui contient des ions Na et des ions K en une proportion Q des ions Na telle qu'exprimée en pourcentage molaire de la quantité totale des ions Na et des ions K, où la proportion Q est inférieure à la proportion P.

4. Verre protecteur pour dispositifs d'affichage selon l'une quelconque des revendications 1 à 3, dans lequel l'épaisseur de la plaque de verre est de 0,05 à 1,1 mm.

5. Plaque de verre pour un verre protecteur pour dispositifs d'affichage, comprenant :
une plaque de verre trempé chimiquement fabriquée par échange d'ions d'une couche de surface d'une plaque de verre pour remplacer des ions Na par des ions K, la plaque de verre ayant une couche de contrainte de compression dont la profondeur est de 6 à 15 µm,
dans laquelle un paramètre de forme, déterminé conformément à la norme JIS R 1625 (1996) sur la base de l'analyse d'une contrainte de rupture du verre protecteur mesurée par un test à anneau double coaxial, n'est pas inférieur à 7, et la résistance de la plaque de verre quand la probabilité cumulée de rupture est de 1 % n'est pas inférieure à 450 MPa, et
la plaque de verre avant l'échange d'ions est faite de verre sodocalcique principalement composé de SiO₂ : 65 à 75 %, Na₂O + K₂O : 5 à 20 %, CaO : 2 à 15 %, MgO : 0 à 10 %, et Al₂O₃ : 0 à 5 % sur une base en poids.

6. Plaque de verre pour un verre protecteur pour dispositifs d'affichage selon la revendication 5, dans laquelle l'épaisseur de la plaque de verre est de 0,05 à 1,1 mm.

7. Méthode de fabrication du verre protecteur pour dispositifs d'affichage selon l'une quelconque des revendications 1 à 4, comprenant les étapes de :
mise en oeuvre d'un échange d'ions d'une couche de surface d'une plaque de verre pour remplacer des ions Na par des ions K ; et
découpage de la plaque de verre,
l'échange d'ions comprenant une première étape de mise en contact de la plaque de verre avec un premier sel qui contient des ions Na et des ions K en une proportion P des ions Na telle qu'exprimée en pourcentage molaire de la quantité totale des ions Na et des ions K ; et
une deuxième étape subséquente de mise en contact de la plaque de verre avec un deuxième sel qui contient des ions Na et des ions K en une proportion Q des ions Na telle qu'exprimée en pourcentage molaire de la quantité totale des ions Na et des ions K, où la proportion Q est inférieure à la proportion P.

8. Méthode selon la revendication 7, dans laquelle la couche de contrainte de compression formée au niveau d'une surface de la plaque de verre par la première étape a une profondeur de 5 à 23 µm.

9. Méthode selon la revendication 7 ou 8, dans laquelle la proportion P est de 20 à 40 % en moles.

10. Méthode selon l'une quelconque des revendications 7 à 9, dans laquelle la proportion Q est de 0 à 2 % en moles.

11. Méthode selon l'une quelconque des revendications 7 à 10, dans laquelle la température du premier sel est de 0,8 à 1,05 fois le point de contrainte de la plaque de verre avant l'échange d'ions.

12. Méthode selon l'une quelconque des revendications 7 à 11, dans laquelle la température du deuxième sel est inférieure à la température du premier sel.

13. Méthode selon l'une quelconque des revendications 7 à 12, dans laquelle l'épaisseur de la plaque de verre est de 0,05 à 1,1 mm.

14. Utilisation de la plaque de verre de la revendication 5 ou 6 en tant que verre protecteur pour dispositifs d'affichage.

15. Utilisation selon la revendication 14, dans laquelle le dispositif d'affichage est un dispositif électronique choisi parmi les téléphones mobiles, les ordiphones et les tablettes électroniques.
